Europäisches Patentamt

European Patent Office

Office européen des brevets

(11) Numéro de publication: **0 099 317**
**A2**

## (12) DEMANDE DE BREVET EUROPEEN

(21) Numéro de dépôt: 83450018.3

(22) Date de dépôt: 08.07.83

(51) Int. Cl.³: **A 01 G 9/24**

(30) Priorité: 09.07.82 FR 8212225

(43) Date de publication de la demande:
25.01.84 Bulletin 84/4

(84) Etats contractants désignés:
AT BE CH DE GB IT LI LU NL SE

(71) Demandeur: Fimbault, Jean-Pierre
"La Sautonie" Saint-Hilaire-d'Estissac
F-24140 Villamblard(FR)

(72) Inventeur: Fimbault, Jean-Pierre
"La Sautonie" Saint-Hilaire-d'Estissac
F-24140 Villamblard(FR)

(74) Mandataire: Thébault, Jean-Louis
Cabinet Jean-Louis Thébault 50, Cours de Verdun
F-33000 Bordeaux(FR)

(54) Dispositif de relevage des bords inférieurs des éléments de recouvrement des serres-tunnels.

(57) Dispositif de relevage des bords, latéraux des éléments souples (2) tels que feuille, film, toile, de recouvrement de serres-tunnels, caractérisé en ce qu'il comprend une pluralité d'organes de relevage (5) engagés à cheval sous le deux rebords adjacents parallèles (2a) desdits éléments de recouvrement, et disposés à intervalle en rangée parallèlement aux tunnels et sur toute leur longueur et des moyens pour éloigner ou rapprocher du sol lesdits organes de relevage (5) de façon à déplacer simultanément tous les organes d'au moins une rangée.

Application aux serres-tunnels notamment pour la culture de fruits, fleurs, légumes.

FIG.1

– 1 –

# DISPOSITIF DE RELEVAGE DES BORDS INFERIEURS DES ELEMENTS DE RECOUVREMENT DES SERRES-TUNNELS.

La présente invention se rapporte à un dispositif permettant le relevage au-dessus du sol des bords inférieurs des éléments de recouvrement, notamment des feuilles ou toiles en matière plastique transparente ou translucide, des serres-tunnels ou similaires.

L'invention s'applique plus particulièrement à la culture sous serres de fruits, notamment les fraises, bien qu'elle puisse également s'appliquer à la culture de plantes telles que les fleurs.

Les fraises sont généralement, du moins sous les latitudes françaises, cultivées sous des serres formées à l'aide d'une feuille,film ou toile de matière plastique, soutenue par des arceaux disposés de place en place de manière à constituer un tunnel à l'intérieur duquel les fraisiers sont plantés en rangées parallèles à l'axe du tunnel.

Ces serres sont destinées à protéger les plantes des intempéries, notamment les gelées, les pluies, les orages de grêle, et à favoriser leur croissance en maintenant à l'intérieur des tunnels ainsi formés une température plus favorable à un développement rapide et à une récolte précoce.

Ces dispositifs présentent toutefois des inconvénients liés à la nécessité à certaines époques de la culture de relever les bords latéraux du film plastique de recouvrement,lesquels bords reposent normalement sur le sol de part et d'autre du tunnel. C'est ainsi, notamment, qu'au moment de la fécondation (par le vent et/ou les insectes) des fleurs de fraisier, au moment des traitements tels que le sulfatage, et aux moments des cueillettes successives, les bords du film plastique doivent être relevés pour permettre les opérations en question.

Ce relevage, puis le rabaissage, est malaisé, prend du temps et occupe du personnel car jusqu'ici il était effectué à la main.

Le but de la présente invention est précisément de proposer un système de relevage, et de rabaissage, des bords de films plastiques (ou analogues) de telles serres tunnels permettant d'opérer sur toute la longueur des serres et sur plusieurs serres en parallèle simultanément avec le minimum de temps et de personnel et en un temps considérablement réduit.

A cet effet, l'invention a pour objet un dispositif de relevage des bords latéraux des éléments souples tels que feuille, film, toile, de recouvrement de serres-tunnels, caractérisé en ce qu'il comprend une pluralité d'organes de relevage engagés à cheval sous les deux rebords adjacents parallèles desdits éléments de recouvrement, et disposés à intervalle en rangée parallèlement aux tunnels et sur toute leur longueur et des moyens pour éloigner ou rapprocher du sol lesdits organes de relevage de façon à déplacer simultanément tous les organes d'au moins une rangée.

Suivant un premier mode de réalisation plus particulièrement appliqué aux serres-tunnels de faibles hauteur et largeur et où la circulation est extérieure aux serres, les organes de relevage sont associés par paires disposées à l'intérieur des serres-tunnels, les organes de relevage agissant sur les deux rebords latéraux du même élément de recouvrement.

Suivant un second mode de réalisation plus particulièrement appliqué aux serres-tunnels de grandes dimensions et où la circulation se fait à l'intérieur des serres, les organes de relevage sont associés par paires disposées dans les intervalles entre serres, les organes de relevage agissant sur les rebords latéraux en regard des éléments de recouvrement de deux serres-tunnels adjacentes.

Dans l'un et l'autre des modes de réalisation ci-dessus, les moyens pour déplacer verticalement lesdits organes de relevage sont constitués, par exemple, par une potence associée à chaque paire d'organes de relevage et formée d'un montant vertical fiché dans le sol et d'un bras ou flèche articulé à une extrémité sur le montant et solidaire à l'autre extrémité de la paire d'organes de relevage associée, et par un système de traction par filins, chaînes ou analogues reliant chaque flèche articulée à un moyen moteur agissant simultanément sur toutes les potences d'au moins une serre-tunnel.

D'autres caractéristiques et avantages ressortiront de la description qui va suivre de modes de réalisation du dispositif selon l'invention, description donnée à titre d'exemple uniquement et en regard des dessins annexés sur lesquels :

- Fig. 1 représente une vue en perspective partielle d'un premier mode de réalisation du dispositif de l'invention,

- Fig. 2 est une vue schématique partielle en coupe verticale de la serre-tunnel de la fig. 1 ;

- Fig. 3 et 4 représentent deux vues d'un mode de réalisation du montage de la flèche de la potence de relevage ;

- Fig. 5 et 6 illustrent le système de traction des potences ;

- Fig. 7 représente une vue en élévation d'un mode de réalisation des moyens pour opérer une traction sur le système à filins relié à chaque potence, et

- Fig. 8 illustre schématiquement un second mode de réalisation du dispositif de l'invention.

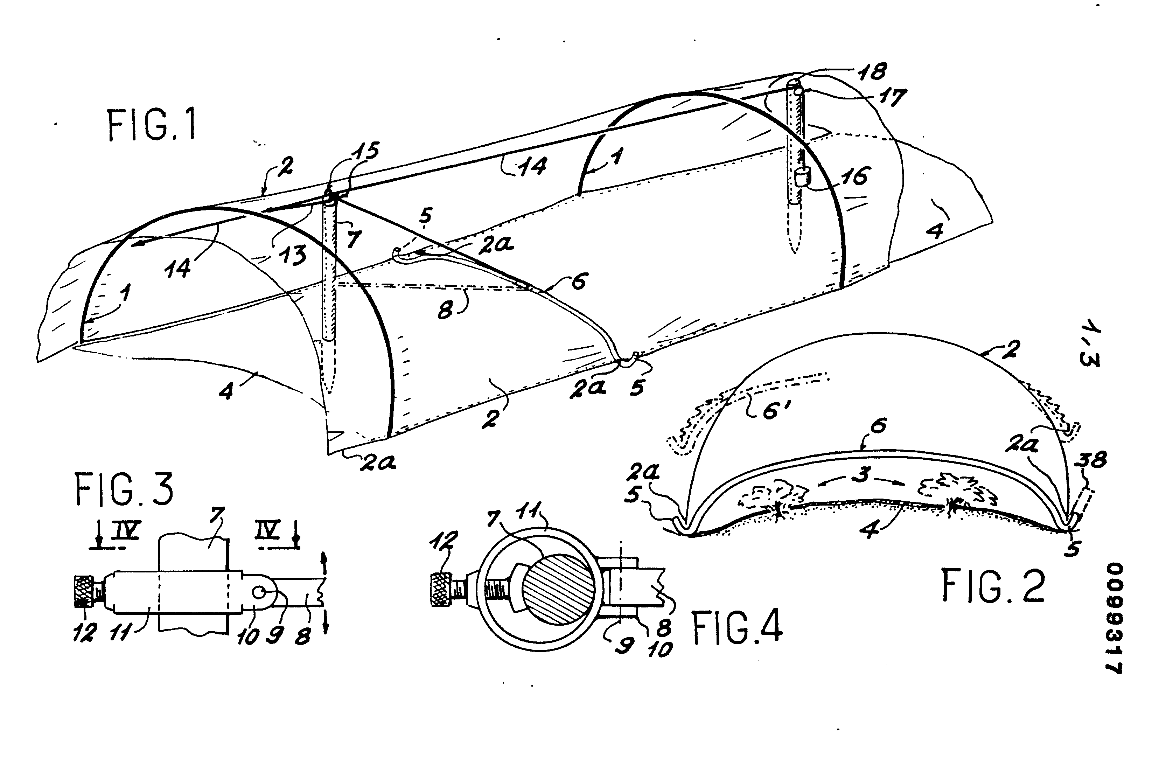

Sur la fig. 1 on a représenté très schématiquement une serre-tunnel du type utilisé pour la culture des fraisiers et comprenant une série d'arceaux 1 de dimensions et formes variables, enfoncés dans le sol de place en place et alignés de façon qu'une fois recouverts d'un film ou toile plastique 2 (ou autre matériau en feuille approprié) on constitue un tunnel rectiligne continu à l'intérieur duquel s'effectue la culture de fraisiers 3 (fig. 2).

Dans ce tunnel le sol est légèrement bombé et recouvert d'un paillon 4 en matière plastique dans lequel sont percées deux séries de trous parallèles recevant chacun un pied de fraisier 3. Ce type de serre est parfaitement connu et n'a pas besoin d'être décrit plus en détail.

Le but de l'invention est de proposer un dispositif pour relever les deux bords latéraux 2a du film, feuille ou toile de recouvrement 2, lesquels normalement reposent sur le sol tout le long de la serre.

Dans le mode de réalisation de la fig. 1 le dispositif de relevage est disposé à l'intérieur de la serre-tunnel et comprend plusieurs organes de relevage 5 associés par paire et engagés à cheval en dessous des deux rebords latéraux 2a du film 2. Ces organes 5 ont par exemple une forme de cornes recourbées vers le haut et disposées aux deux extrémités d'une traverse 6 cintrée pour ne pas faire obstacle au développement des fraisiers.

Entre chaque arceau 1 est disposée au moins une traverse 6. Chaque traverse 6 comporte son propre système de relevage constitué, par exemple, par une potence formée d'un pieu ou montant 7 fiché verticalement dans le sol à l'intérieur de la serre-tunnel dans la zone centrale.

Sur le pieu 7 est articulée une flèche ou bras 8 dont l'extrémité est solidaire de la traverse (par exemple par soudage).

Les fig. 3 et 4 illustrent un mode de montage de la flèche 8 sur le pieu 7. La flèche 8 est mobile dans un plan vertical contenant l'axe du pieu 7 et, à cet effet, tourillonne autour d'un axe horizontal 9 d'une chape 10 solidaire d'un collier de serrage 11 réglable en position le long du pieu 7. Une vis 12 permet de fixer le collier 11 à la hauteur désirée. La commande de la flèche 8 se fait par un câble 13 fixé, d'une part, à l'extrémité de la flèche 8 (ou à la traverse 6) et, d'autre part, à un câble commun 14 courant sur toute la longueur de la serre-tunnel au voisinage de son sommet et auquel sont fixés tous les câbles 13 de relevage des traverses 6 de la serre-tunnel.

Les câbles 13 et 14 peuvent être remplacés par tout lien souple suffisamment résistant (fil de fer, câ-

- 5 - . 0099317

blette, câble en nylon, etc...).

Le guidage des câbles 13,14 est assuré à l'extrémité supérieure de chaque pieu 7 par deux cavaliers 15 fixés côte à côte sur le pieu.

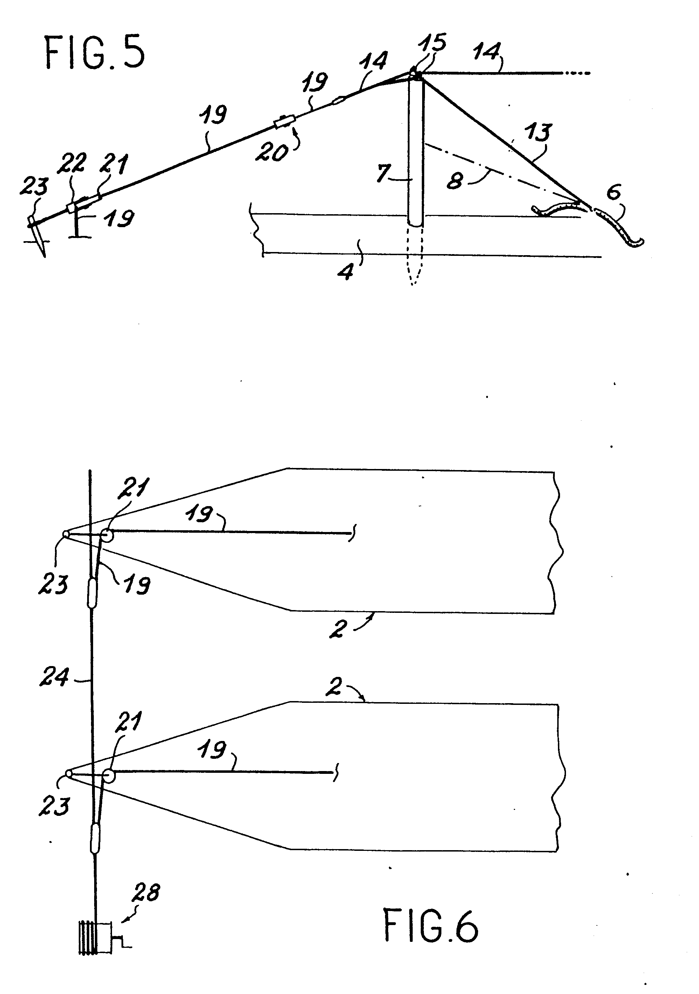

Le câble 14 est mû à une extrémité de la serre-tunnel (à gauche sur la fig. 1) par un système qui sera décrit plus loin en référence aux fig. 5 à 7. A l'autre extrémité de la serre-tunnel est prévu un dispositif tendeur de rappel des flèches 8 en position abaissée constitué par un poids 16 fixé à l'extrémité du câble 14 lequel passe sur une poulie 17 portée par un pieu 18 enfoncé dans le sol à l'extrémité de la serre-tunnel. A l'autre extrémité de cette dernière le câble 14 est fixé à un câble souple 19 dans lequel est interposé un tendeur manuel 20, le câble 19 passant sur une poulie 21 fixée au ras du sol dans l'axe de la serre-tunnel par l'intermédiaire d'une chape 22 ancrée par un pieu 23 enfoncé dans le sol (Fig. 5).

Les poulies 21 font office de renvoi d'angle pour les différents câbles 19 qui sont tous raccordés à un organe de traction commun 24 constitué par une sorte de chaîne à maillons rigides très allongés, disposée sur le sol orthogonalement aux axes des serres-tunnels à une extrémité de celles-ci. Les maillons de cette chaîne 24 ont une longueur correspondant à l'écartement entre serres et sont reliés chacun à l'extrémité d'un câble 19.

L'extrémité libre de la chaîne 24 est fixée à un câble souple 25 passant sur une poulie 26 portée par un poteau 27 sur lequel est monté de manière amovible un treuil à main 28.

Le câble 29 du treuil est muni d'un crochet 30 coopérant avec un chariot 31 mobile verticalement dans une glissière 32 fixée au poteau 27 et auquel est fixé le câble 25. Le chariot 31 peut être immobilisé le long de la glissière 32 suivant un certain nombre de positions déterminées par un système à cheville 33 et trous 34 bloquant le chariot à la hauteur désirée.

Avantageusement le treuil 28 est emboîté par l'intermédiaire d'une pièce carré 35,par exemple solidaire du treuil, dans un manchon tubulaire carré 36 solidaire du po-

teau 27 et est muni d'une poignée 37 permettant de déplacer le treuil 28 d'un poteau 27 à un autre.

Un même poteau 27 permet de desservir plusieurs serres-tunnels disposées en parallèle.

Les fig. 1 et 2 représentent le dispositif de l'invention en position abaissée, les bords latéraux 2 a du film 2 reposant sur le sol sur toute la longueur de la serre.

Si l'on veut relever les bords 2a au droit des traverses 6 pour une raison quelconque (aération, traitement, cueillette, fécondation des fleurs, etc...) il suffit de mettre le treuil 28 en place sur le poteau 27 correspondant aux serres à découvrir, d'engager le crochet 30 sur l'axe transversal du chariot 31 (lequel se trouve alors en position basse sur la glissière 32), de déverrouiller le chariot et de manoeuvrer le treuil pour exercer une traction sur la chaîne 24 et donc l'ensemble des câbles 14 reliés à cette chaîne.

La traction sur les câbles 14 fait relever simultanément toutes les flèches 8 et donc les traverses 6 jusqu'à la hauteur désirée comme représenté en 6' sur la fig. 2. Les traverses 6 sont immobilisées à la hauteur voulue par verrouillage du chariot 31 sur la glissière 32 au niveau choisi grâce au système cheville 33 - trous 34. Ceci permet de déconnecter le câble 29 et de transporter le treuil 28 sur un autre poteau 27 desservant d'autres serres, évitant ainsi de munir chaque poteau d'un treuil à poste fixe.

La manoeuvre inverse d'abaissement des traverses s'effectue tout aussi rapidement avec l'aide des contrepoids 16, après déverrouillage préalable du chariot 31 grâce au treuil 28, les traverses 6 étant entraînées par leur propre poids et celui du film plastique 2.

On peut prévoir bien entendu un treuil électrique à chaque poteau 27 avec ouverture et fermeture des serres automatisées et programmées à heures régulières et/ou suivant la température.

La cueillette s'effectuant avec les traverses 6 relevées, le dispositif de l'invention n'entrave absolument pas les opérations. Le relevage des bords 2a peut d'ailleurs être complété à la main si nécessaire entre deux traverses consécutives de la même serre-tunnel.

Il est à noter que le nombre de potences de

relevage entre deux arceaux 1 peut varier.

Les tendeurs 20 permettent (en association avec les colliers coulissants 11) d'harmoniser la hauteur de relevage des traverses 6 de la totalité des serres desservies par le même treuil.

Avantageusement, par souci de sécurité les extrémités des cornes 5 peuvent être munies d'une coiffe 38 (fig. 2) de protection,de couleur vive par exemple,évitant aux personnes circulant entre les serres de se blesser ou d'accrocher les traverses au passage.

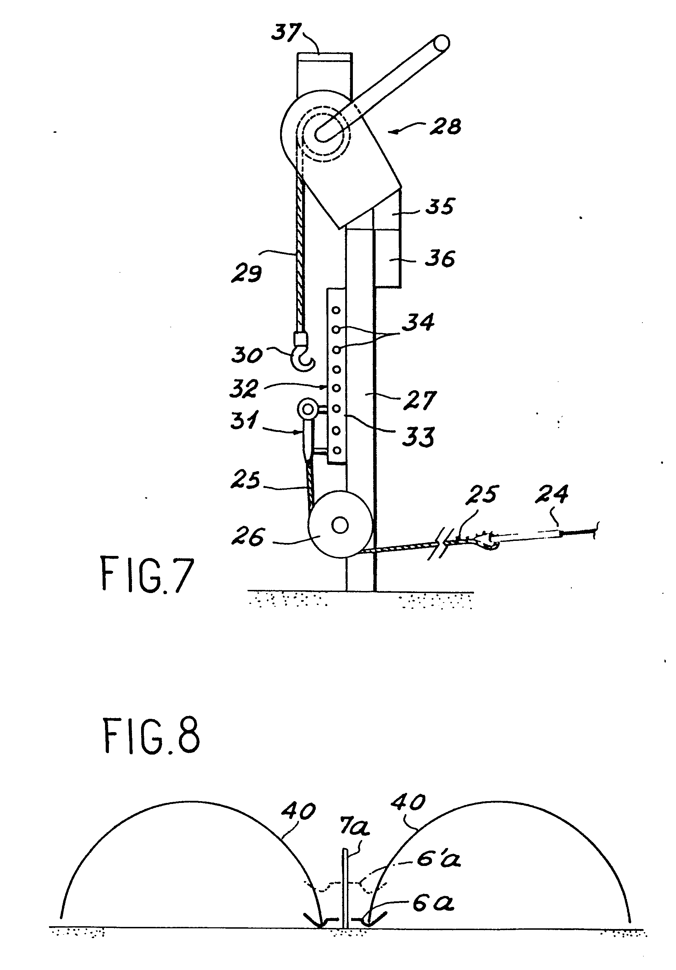

La fig. 8 illustre une variante d'utilisation du dispositif de l'invention destinée aux serres de dimensions plus importantes à l'intérieur desquelles se fait la circulation.

Il est alors possible dans les intervalles entre de telles serres-tunnels 40 d'installer le même dispositif que celui disposé à l'intérieur de la serre-tunnel de la fig. 1. On a schématisé en 6a et 6'a les positions extrêmes des traverses de relevage, en 7a les potences de relevage commandées par exemple par le même système que sur les fig. 1 à 7. A la différence de serres-tunnels suivant la fig. 1, chaque traverse 6a prend en charge les bords latéraux des films plastiques des deux serres 40 adjacentes et parallèles. Un tel dispositif ne sert alors qu'à l'aération et qu'à faciliter la fécondation des fleurs.

Enfin, l'invention n'est pas limitée aux modes de réalisation représentés et décrits ci-dessus mais en couvre au contraire toutes les variantes.

C'est ainsi qu'il est également possible de prévoir un relevage de l'un des bords du film de la serre-tunnel indépendamment de l'autre bord en disposant deux systèmes.de relevage en parallèle identiques.

A cet effet, chaque traverse 6 est divisée en deux demi-traverses indépendantes portant chacune un organe de relevage 5. Chaque demi-traverse est relevable par un dispositif strictement identique à celui représenté sur les dessins en sorte que chaque collier 11 porte deux flèches 8 côte à côte solidaireschacune d'une demi-traverse et il est prévu deux câbles 14 en parallèle reliés chacun aux demi-traverses d'un côté et de l'autre respectivement par des câbles 13. Enfin, il est prévu deux chaînes telles que 24 reliées à deux chariots 32 en parallèle et le crochet de levage 30 est remplacé par un double crochet en forme d'ancre permettant, à partir du même treuil 28, de relever les organes 5 d'un seul côté de la serre-tunnel au choix ou des deux côtés.

- 1 -

0099317

R E V E N D I C A T I O N S
-:-:-:-:-:-:-:-:-:-:-

1. Dispositif de relevage des bords latéraux des éléments souples (2) tels que feuille, film, toile, de recouvrement de serres-tunnels, caractérisé en ce qu'il comprend une pluralité d'organes de relevage (5) engagés à cheval sous les deux rebords adjacents parallèles (2a) desdits éléments de recouvrement, et disposés à intervalle en rangée parallèlement aux tunnels et sur toute leur longueur et des moyens pour éloigner ou rapprocher du sol lesdits organes de relevage (5) de façon à déplacer simultanément tous les organes d'au moins une rangée.

2. Dispositif suivant la revendication 1 plus particulièrement destiné aux serres-tunnels de faibles hauteur et largeur et où la circulation est extérieure aux serres, caractérisé en ce que les organes de relevage (5) sont associés par paires (6) disposées à l'intérieur des serres-tunnels, les organes de relevage agissant sur les deux rebords latéraux (2a) du même élément de recouvrement (2).

3. Dispositif suivant la revendication 1 plus particulièrement destiné aux serres-tunnels de grandes dimensions et où la circulation se fait à l'intérieur des serres, caractérisé en ce que les organes de relevage sont associés par paires (6a) disposées dans les intervalles entre serres (40), les organes de relevage agissant sur les rebords latéraux en regard des éléments de recouvrement de deux serres-tunnels adjacentes.

4. Dispositif suivant la revendication 1 et l'une des revendications 2 ou 3 caractérisé en ce que lesdits moyens pour déplacer verticalement lesdits organes de relevage sont constitués, par exemple, par une potence associée à chaque paire (6) d'organes de relevage et formée d'un montant vertical (7) fiché dans le sol et d'un bras ou flèche (8) articulé à une extrémité sur le montant (7) et solidaire à l'autre extrémité de la paire (6) d'organes de relevage associée, et par un système de traction par filins, chaînes, ou analogues (13,14,19,24,25,29), reliant chaque flèche articulée (8) à un moyen moteur (28) agissant simultanément sur toutes les potences d'au moins une serre-tunnel.

5. Dispositif suivant revendication 4 caractérisé en ce que chaque paire d'organes de relevage est constituée d'une traverse (6) cintrée et dont les extrémités sont recourbées vers le haut en forme de cornes (5).

6. Dispositif suivant la revendication 4 ou 5 caractérisé en ce que ledit système de traction est constitué par un câble ou analogue (13) reliant l'extrémité de la flèche (8) à un câble de traction (14) courant tout le long de la serre-tunnel à la partie supérieure de celle-ci, ledit câble de traction (14) commandant toutes les potences de relevage de la serre et étant guidé par des moyens appropriés (15), l'une des extrémités du câble (14) étant raccordée à un moyen de traction et l'autre extrémité étant munie d'un contrepoids (16) de rappel des flèches (8) en position abaissée.

7. Dispositif suivant la revendication 6 caractérisé en ce que ledit moyen de traction du câble (14) est une chaîne de traction (24) ou analogue disposée au ras du sol orthogonalement aux axes des serres-tunnels, à l'une des extrémités de celles-ci, ladite chaîne (24) étant reliée à chaque câble (14) par un système à câble et poulie de renvoi (21) et étant elle-même mue par l'intermédiaire d'un treuil (28) manuel ou non.

8. Dispositif suivant la revendication 7 caractérisé en ce que ladite chaîne (24) ou analogue est commandée à partir du treuil (28) à l'aide d'un chariot (31) mobile le long d'une glissière fixe verticale (32) et relié à l'extrémité de ladite chaîne (24) par une liaison à câble (25) et poulie de renvoi (26), le chariot (31) étant verrouillable en position le long de la glissière et désolidarisable du câble (29) du treuil (28) lequel est amovible.

9. Dispositif suivant la revendication 4 caractérisé en ce que ladite flèche (8) est articulée autour d'un axe horizontal (9) orthogonal à l'axe de la serre-tunnel et porté par un collier de serrage (11) rapporté sur ledit montant (7) et réglable en hauteur.

10. Dispositif suivant la revendication 1, caractérisé en ce que les organes de relevage (5) d'un même côté de l'élément de recouvrement (2) sont relevables indépendamment des organes de relevage de l'autre côté, ou simultanément, à l'aide de demi-traverses solidaires chacune d'un organe de relevage (5), chaque demi-traverse étant relevable à l'aide de moyens de déplacement vertical conformes à la revendication 4.

FIG.1

18

17

2

15

14

1

16

5

7

2a

4

14

13

1

6

8

1,3

4

2a

5

2

2a

2

FIG.3

IV

IV

7

12 11

10 9 8

12

7 11

9 10

8

FIG.4

6'

2

6

2a

38

3

5

2a

5

4

5

FIG.2

0099317

FIG.5

FIG.6

3,3

FIG.7

FIG.8